# EUROPÄISCHE PATENTSCHRIFT

(11) **EP 3 973 207 B1**
(45) Veröffentlichungstag und Bekanntmachung des Hinweises auf die Patenterteilung: **21.06.2023**
(21) Anmeldenummer: 20730986.5
(22) Anmeldetag: 20.05.2020
(51) Int. Cl.: F16D 65/12, F16D 65/02

(54) **BREMSSCHEIBE**
BRAKE DISC
DISQUE DE FREIN

(30) Priorität: 21.05.2019 DE 102019113487
(43) Veröffentlichungstag der Anmeldung: 30.03.2022
(73) Patentinhaber: Erdrich Umformtechnik GmbH, 77871 Renchen-Ulm (DE)
(72) Erfinder: MÜLLER, Matthias, 77704 Oberkirch (DE); LORENZ, Ulrich, 99610 Sömmerda (DE); BAUERSFELD, Rico, 06578 Kannawurf (DE)
(74) Vertreter: Mertzlufft-Paufler, Cornelius
(86) Internationale Anmeldenummer: PCT/EP2020/064173
(87) Internationale Veröffentlichungsnummer: WO 2020/234406

(56) Entgegenhaltungen:
- DE-A1- 10 250 231
- DE-A1- 10 322 454
- DE-A1-102008 021 625
- DE-A1-102016 115 022
- DE-B3-102010 055 973
- US-A- 6 035 978

## Beschreibung

Die Erfindung betrifft eine Bremsscheibe, die wenigstens einen Reibring und einen mit dem Reibring drehfest verbundenen Bremstopf umfasst.

Bremsscheiben eingangs genannter Art sind beispielsweise aus den Druckschriften DE 10 2010 055973 B3, DE 10 2016 115022 A1, US 6 035 978 A, DE 10 2008 021 625 A1, DE 102 50 231 A1 sowie DE 103 22 454 A1 vorbekannt und werden beispielsweise in Scheibenbremsen von Kraftfahrzeugen verbaut, um während eines Bremsvorganges mit Hilfe von an einem Bremssattel befestigten Bremsbelägen eine Drehbewegung zu verzögern. Durch die Erzeugung einer Reibung zwischen der Bremsscheibe und dem Bremsbelag kann eine kinetische Energie eines Fahrzeugs in eine thermische Energie umgewandelt werden, wodurch das Fahrzeug an Geschwindigkeit verliert.

Man kennt bereits Bremsscheiben, die vorwiegend zum Erreichen einer Gewichtsreduktion der gesamten Bremsscheibe wenigstens zweiteilig aus einem Reibring und einem Bremstopf hergestellt sind. Als Reibring wird der Teil einer Bremsscheibe bezeichnet, der mit den Bremsbelägen in Kontakt tritt.

Ein Problem bei derart mehrteilig ausgestalteten Bremsscheiben ist nun, dass der Reibring mit dem Bremstopf so stabil verbunden sein muss, dass die Verbindung auch bei den hohen Beanspruchungen eines Bremsprozesses erhalten bleibt.

Die Lösung dieser Aufgabe wird erfindungsgemäß durch die Merkmale nach Anspruch 1 bereitgestellt.

Insbesondere wird zur Lösung der Aufgabe eine Bremsscheibe eingangs genannter Art vorgeschlagen, wobei eine Seitenwandung des Bremstopfes wenigstens eine Umformung in radialer Richtung aufweist, über welche Umformung eine in Umfangsrichtung des Bremstopfes orientiere Anlagefläche ausgebildet ist, mit welcher Anlagefläche eine drehfeste Verbindung zwischen Reibring und Bremstopf eingerichtet ist, und dass ein aus Außendurchmesser Da eines Seitenwandabschnitts des Bremstopfes und einem Innendurchmesser Di des Reibrings gebildetes Verhältnis Da/Di maximal 1,01 beträgt. Der Vorteil der erfindungsgemäßen Ausgestaltung besteht darin, dass durch die wenigstens eine Umformung eine besonders stabile, drehfeste Verbindung zwischen dem Reibring und dem Bremstopf ausgebildet ist. Des Weiteren beträgt der Außendurchmessers Da des Bremstopfes max. 101 % des Innendurchmessers des Reibrings, da bei größerem Übermaß des Seitenwandabschnitts des Bremstopfes die Fertigung schwierig ist. Z.B. kann es beim Einfügen des Bremstopfes in den Reibring zu Beschädigungen, wie Rissbildungen, kommen. Darüber hinaus kann durch die Begrenzung des Übermaßes des Bremstopfes eine Verformung (Schirmung) der gesamten Bremsscheibe besser verhindert werden, die gerade bei längeren Bremsvorgängen auftritt, wenn sich insbesondere der Reibring stark erhitzt. Der Reibring kann dabei zum Beispiel als Guss, insbesondere aus Grauguss, gefertigt sein, wodurch die erforderlichen Materialeigenschaften erreichbar sind. Der Bremstopf selbst kann durch eine Materialumformung hergestellt sein. Durch die zweiteilige Ausgestaltung ist es möglich, die Wandungen des Bremstopfes deutlich dünnwandiger als bei einteiligen Bremsscheiben auszubilden und somit Gewicht einzusparen. Die Herstellung einer drehfesten Verbindung mittels wenigstens einer Umformung, vorzugsweise mittels mehrerer Umformungen, ist zudem einfach herzustellen, erfordert keine besonderen Genauigkeitsanforderungen bei der Herstellung und ist je nach Anforderung des Bremsmoments über die Anzahl der zur Ausbildung der drehfesten Verbindung verwendeten Umformungen skalierbar. Durch die wenigstens eine Umformung kann insbesondere eine formschlüssige Verbindung zwischen dem Reibring und dem Bremstopfes ausgebildet sein. Durch die zweiteilige Ausgestaltung ist eine Entkopplung des Reibrings und des Bremstopfes möglich, so dass die Reibfläche der Bremsscheibe zu weniger Rissbildung neigt.

Die in Umfangsrichtung des Bremstopfes orientiere Anlagefläche kann wenigstens teilweise derart ausgerichtet sein, dass ein auf der Anlagefläche stehender Normalenvektor in Umfangsrichtung des Bremstopfes zeigt. Somit ist eine besonders gute Bremsmomentübertragung möglich. Insbesondere kann darunter verstanden werden, dass sich die Anlagefläche wenigstens teilweise in radialer Richtung erstreckt.

Eine Umformung im Sinne der Anmeldung kann sich auf eine durch eine Umformtechnik gezielt hergestellte Struktur beziehen, wobei die hergestellte Struktur in radialer Richtung von der Wandung des Bremstopfes abstehen kann.

Drehfest im Sinne der Anmeldung kann bedeuten, dass keine Relativverdrehung von Reibring zu Bremstopf insbesondere um eine Rotationsachse möglich ist, insbesondere ohne die Bremsscheibe zu zerstören.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Gemäß einer vorteilhaften Ausgestaltung kann der Reibring wenigstens ein Befestigungsloch aufweisen. Beispielsweise kann das wenigstens eine Befestigungsloch als ein Sackloch und/oder als ein Belüftungskanal ausgestaltet sein. Vorzugsweise wobei in das wenigstens eine Befestigungsloch die wenigstens eine Umformung und/oder ein in die wenigstens eine Umformung eingesetztes und/oder von der wenigstens einen Umformung gehaltenes Befestigungselement wenigstens teilweise eingreift, so dass eine drehfeste Verbindung zwischen Reibring und Bremstopf eingerichtet ist. Somit ist eine besonders stabile drehfeste Verbindung zwischen dem Reibring und dem Bremstopfes ausgebildet.

Gemäß einer weiteren vorteilhaften Ausgestaltung kann der Reibring wenigstens einen wenigstens teilweise in radialer Richtung verlaufenden Belüftungskanal aufweisen, der sich von einer in einer Innenumfangsfläche ausgebildeten Eintrittsöffnung bis zu einer Außenumfangsfläche des Reibrings erstreckt. Somit ist es möglich, die während eines Bremsvorgangs entstehende thermische Energie über den wenigstens einen Belüftungskanal abzuführen, so dass eine zu starke Aufheizung der Bremsscheibe vermieden werden kann. Bremsscheiben mit Belüftungskanälen sind an sich bereits bekannt und können beispielsweise durch die Verbindung von zwei Reibscheiben ausgebildet sein, zwischen denen die Belüftungskanäle verlaufen. Um neben den Belüftungskanälen keine zusätzliche Befestigungslöcher ausbilden zu müssen, kann der wenigstens eine Belüftungskanal zur Einrichtung einer drehfesten Verbindung zwischen Reibring und Bremstopf vorgesehen sein. Die zumindest eine Umformung kann daher an oder im Bereich der Eintrittsöffnung des Belüftungskanals ausgebildet sein.

Um eine besonders stabile drehfeste Verbindung zwischen dem Reibring und dem Bremstopf auszubilden, kann die Umformung nach außen und/oder nach innen gerichtet sein. Vorzugsweise kann die Umformung daher senkrecht zu einer während eines Bremsvorgangs auftretenden Drehrichtung verlaufen und/oder wenigstens teilweise in Drehrichtung orientiert sein. Somit ist eine ausreichende Festigkeit auch bei relativ hohem Bremsmoment eingerichtet.

Gemäß einer weiteren vorteilhaften Ausgestaltung kann in die wenigstens eine Umformung wenigstens ein Befestigungselement eingesetzt sein. Alternativ oder ergänzend dazu kann von der Umformung wenigstens ein Befestigungselement gehalten sein. Die Anlagefläche kann dabei wenigstens teilweise durch das Befestigungselement ausgebildet sein. Durch das wenigstens eine Befestigungselement kann eine formschlüssige Verbindung zwischen dem Reibring und dem Bremstopf eingerichtet sein. Vorzugsweise kann dabei ein zur Herstellung der Umformung verwendeter, zurückbleibender Stempel als Befestigungselement ausgestaltet sein. Durch die Verwendung eines Befestigungselements kann ein höheres Bremsmoment erreicht werden. Die Bremsscheibe kann somit dazu geeignet sein, auch in schweren Fahrzeugen, wie Lastwagen, eine ausreichend große Bremskraft erzeugen zu können, um diese abzubremsen.

Gemäß einer vorteilhaften Ausgestaltung kann die Anlagefläche wenigstens teilweise durch die Umformung selbst oder nicht durch die Umformung selbst ausgebildet sein. Die Umformung kann somit direkt oder indirekt zur Ausbildung der drehfesten Verbindung zwischen dem Reibring und dem Bremstopfes dienen. Indirekt kann in diesem Zusammenhang bedeuten, dass die Umformung lediglich zur Halterung des Befestigungselements dient, dass die eigentliche Anlagefläche jedoch durch das Befestigungselement ausgebildet ist.

Alternativ oder ergänzend kann es gemäß einem nicht erfindungsgemäßen Beispiel dabei vorgesehen sein, dass zwischen dem Seitenwandabschnitt des Bremstopfes und einer oder der Innenumfangsfläche des Reibrings ein Spalt, insbesondere ein Luftspalt, ausgebildet ist. Durch eine derartige Untermaßfertigung ist es besser möglich, den Effekt der Schirmung zu vermeiden, bei der eine durch Reibung erzeugte Erwärmung die Bremsscheibe in Schirmform aus ihrer Ebene heraus verformt und unter Umständen zu Schäden an der Bremsscheibe führt.

Der Seitenwandabschnitt des Bremstopfes kann beispielsweise einen Außendurchmesser von 160 mm bis 170 mm aufweisen.

Besonders vorteilhaft kann es sein, wenn über die wenigstens eine Umformung, insbesondere mittelbar und/oder unmittelbar, zwischen dem Reibring und dem Bremstopf eine formschlüssige Verbindung eingerichtet ist.

Gemäß einer weiteren vorteilhaften Ausgestaltung kann ein Innendurchmesser des Reibrings durch eine innere Begrenzung einer Reibfläche, auf welcher ein Bremsvorgang erfolgt, bestimmt sein.

Gemäß einer vorteilhaften Weiterbildung kann es vorgesehen sein, dass die wenigstens eine Umformung durch Stanzen und/oder Verbiegen und/oder eine Prägung der Wandung des Bremstopfes ausgebildet ist. Insbesondere kann die Umformung ausgebildet werden, wenn der Bremstopf im Reibring angeordnet ist. Die drehfeste Verbindung kann somit durch Einbringen einer Wandung, insbesondere einer vorgelagerten Wandung, des Bremstopfes in den Reibring eingerichtet sein. Somit ist das Einrichten einer besonders stabilen und dennoch günstig herstellbaren, drehfesten Verbindung möglich.

Um eine bessere Wärmeableitung der sich während eines Bremsvorgangs erhitzen Bremsscheibe zu ermöglichen, kann der Bremstopf wenigstens eine Durchgangsöffnung aufweisen. Vorzugsweise kann die wenigstens eine Durchgangsöffnung einer Eintrittsöffnung eines Belüftungskanals des Reibrings zugeordnet sein. Die Durchgangsöffnung kann somit an einer Eintrittsöffnung eines Belüftungskanals anliegen oder daran anschließen, um eine besonders gute Innenbelüftung der Bremsscheibe einrichten zu können.

Gemäß einer besonders vorteilhaften Ausgestaltung kann ein Randbereich wenigstens einer Durchgangsöffnung, beispielsweise der bereits zuvor genannten wenigstens einen Durchgangsöffnung, als die wenigstens eine Umformung ausgebildet sein. Vorzugsweise kann die Umformung vollständig um die Durchgangsöffnung verlaufen. Die wenigstens eine Umformung kann beispielsweise als eine vorzugsweise umlaufende Halsung ausgebildet sein. Somit ist eine durch einen Formschluss eingerichtete drehfeste Verbindung zwischen der Anlagefläche, die insbesondere durch die Umformung und/oder ein Befestigungselement ausgebildet ist, und einer Wandung, insbesondere einer Innenwandung, des zumindest einen Befestigungslochs möglich.

Um ein maximales Bremsmoment der Bremsscheibe erhöhen zu können, kann es vorteilhaft sein, wenn die Bremsscheibe mehrere Umformungen aufweist. Vorzugsweise können die Umformung gleichmäßig verteilt und/oder punktsymmetrisch in einer Ebene angeordnet sein. Alternativ dazu können sie ungleichmäßig in einer Ebene verteilt sein.

Um eine besonders stabile Bremsscheibe ausbilden zu können, die ein hohes Bremsmoment aushält, können wenigstens zwei Umformungen in unterschiedlichen Ebenen ausgebildet sein.

Gemäß einer vorteilhaften Ausgestaltung kann eine Anzahl an Umformungen ungerade oder gerade sein.

Gemäß einer weiteren vorteilhaften Ausgestaltung kann die wenigstens eine Umformung und/oder die wenigstens eine Durchgangsöffnung des Bremstopfes korrespondierend und/oder abweichend von einer Position einer oder der wenigstens einen Eintrittsöffnung eines oder des Belüftungskanals am Reibring angeordnet sein. Somit kann der Effekt der Schirmung weiter verringert werden, um einen thermischen Verzug entgegenzuwirken und um die axiale Auslenkung zu reduzieren.

Gemäß einer weiteren vorteilhaften Ausgestaltung kann es vorgesehen sein, dass der Bremstopf wenigstens eine Durchgangsöffnung mit einer Umformung und wenigstens eine Durchgangsöffnung ohne eine Umformung aufweist. Somit ist es möglich, dass einige Durchgangsöffnung bei der Ausbildung der drehfesten Verbindung keine Rolle spielen. Sie können beispielsweise nur für die Ableitung von Abwärme vorgesehen sind.

Gemäß einer besonders vorteilhaften Ausgestaltung kann es vorgesehen sein, dass eine Geometrie wenigstens eines Befestigungslochs, beispielsweise des wenigstens einen Befestigungslochs, während einer Herstellung durch ein Gießverfahren im Guss vorgehalten ist, insbesondere ohne weitere Nacharbeitsschritte, wie Zerspanung. Somit ist eine möglichst einfache und kostengünstige Herstellung des Reibrings möglich.

Um eine besonders stabile, formschlüssige Verbindung zwischen dem Reibring und dem Bremstopfes einzurichten, kann die wenigstens eine Umformung eine gleichmäßige, insbesondere symmetrische, vorzugsweise rotations-symmetrische Form aufweisen. Somit kann im Lastfall ein gleichmäßiger Spannungsverlauf erreicht werden.

Um einen größeren Traganteil der wenigstens einen Umformung der Bremsscheibe zu erreichen, kann wenigstens ein Befestigungsloch, beispielsweise das bereits zuvor genannte wenigstens eine Befestigungsloch, einen Anschlag, vorzugsweise einen als Stufe ausgebildeten Anschlag, aufweisen. Der Anschlag kann also durch die wenigstens eine Umformung und/oder durch ein Befestigungselement, beispielsweise das wenigstens eine Befestigungselement, beaufschlagt sein.

Um eine Innenbelüftung des Reibrings weiter verbessern zu können, kann wenigstens ein Befestigungselement, beispielsweise das wenigstens eine bereits zuvor genannte Befestigungselement, als ein Hohlstift ausgestaltet sein.

Gemäß einer vorteilhaften Ausgestaltung kann es vorgesehen sein, dass der Reibring aus Eisen und/oder aus Aluminium hergestellt ist, insbesondere als ein Guss durch ein Gießverfahren. Somit ist eine kostengünstige Fertigung möglich.

Alternativ oder ergänzend kann es vorgesehen sein, dass der Bremstopf aus Stahl und/oder aus Aluminium hergestellt ist. Somit ist zudem die Herstellung des Bremstopfes relativ kostengünstig möglich.

Gemäß einer weiteren vorteilhaften Ausgestaltung kann eine Anzahl an Umformungen und/oder eine Anzahl an Befestigungselementen jeweils geringer als eine Anzahl von Befestigungslöchern sein. Somit ist es möglich, durch die Verwendung unterschiedlicher Bremstöpfe mit gleichbleibenden Reibringen unterschiedliche Bremsmomente auszubilden. Alternativ dazu kann der Bremstopf gleich bleiben und mit unterschiedlichen Reibringen kombiniert werden.

Um eine gleichmäßige Lastverteilung während eines Bremsvorgangs erzielen zu können, kann ein regelmäßiger Winkelabstand zwischen den Umformungen und/oder den Durchgangsöffnungen und/oder den Befestigungslöchern ausgestaltet sein.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:

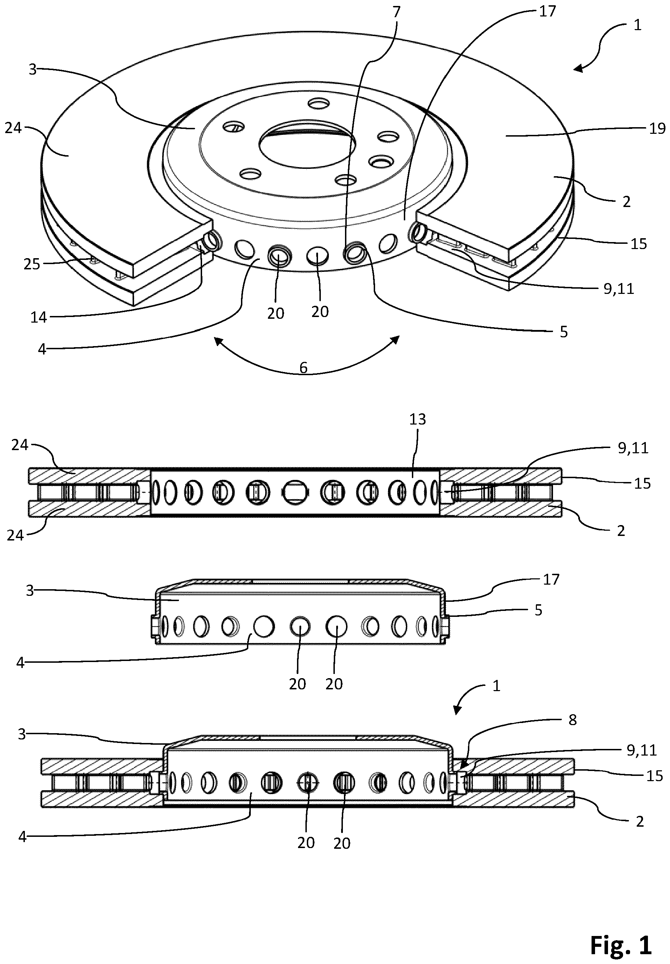

- Fig. 1: eine erste Ausführungsvariante einer erfindungsgemäßen Bremsscheibe in einer perspektivischen Darstellung und in mehreren Schnittdarstellungen, wobei sämtliche Durchgangsöffnungen und Befestigungslöcher in einer gleichen Ebene liegen, und wobei die Belüftungskanäle im Reibring als Befestigungslöcher dienen,

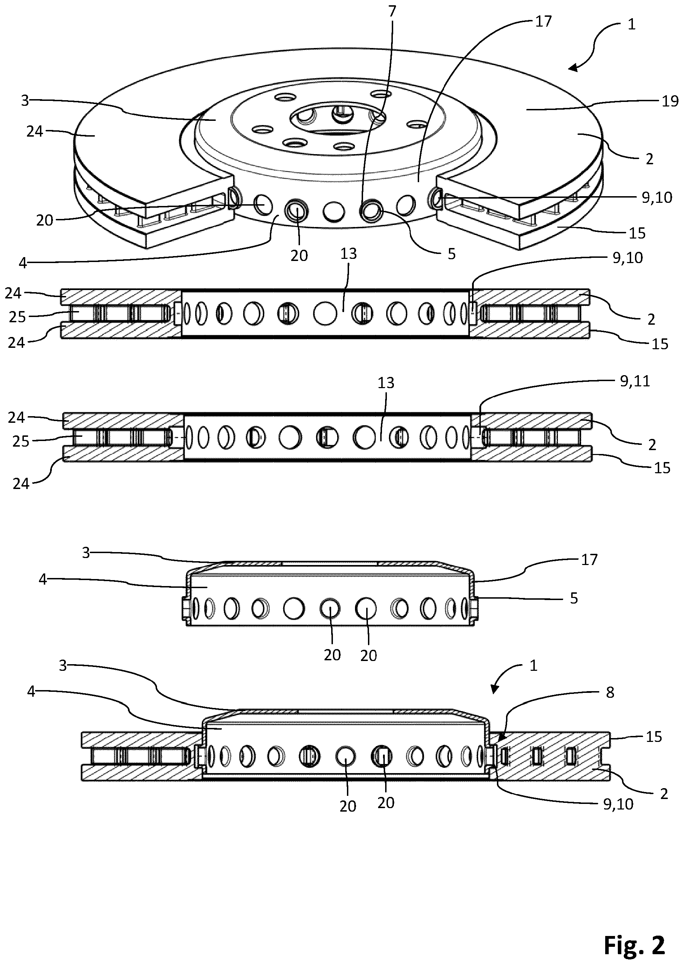

- Fig. 2: eine zweite Ausführungsvariante einer erfindungsgemäßen Bremsscheibe in einer perspektivischen Darstellung und in mehreren Schnittdarstellungen, wobei sämtliche Durchgangsöffnungen und Befestigungslöcher in einer gleichen Ebene liegen, und wobei Belüftungskanäle und/oder Sacklöcher im Reibring als Befestigungslöcher dienen,

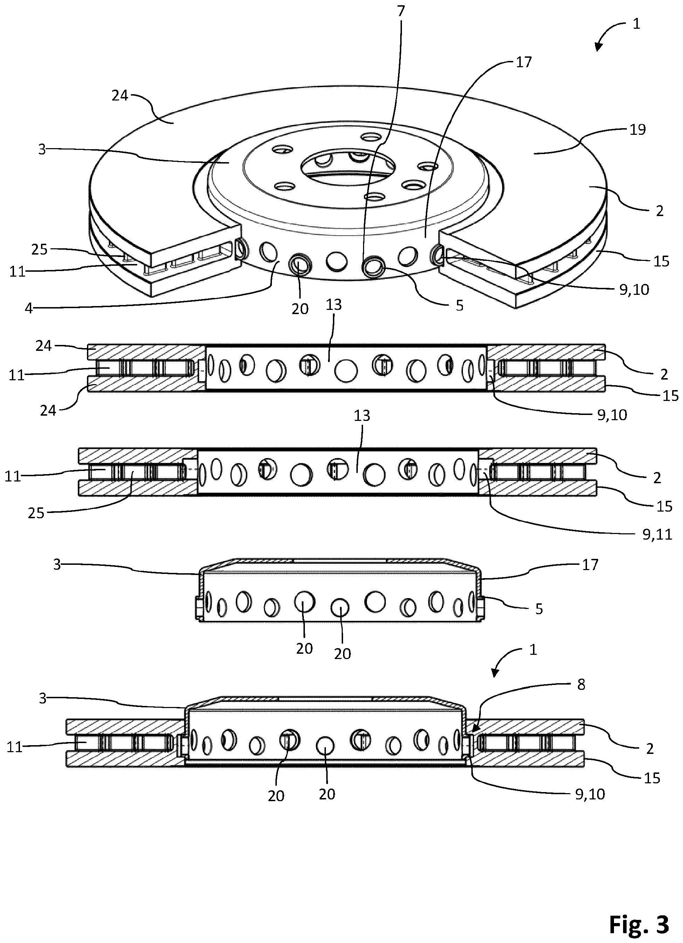

- Fig. 3: eine dritte Ausführungsvariante einer erfindungsgemäßen Bremsscheibe in einer perspektivischen Darstellung und in mehreren Schnittdarstellungen, wobei die einzelnen Durchgangsöffnungen in unterschiedlichen Ebenen liegen, so dass nur die Durchgangsöffnungen, die eine Umformung aufweisen, in einer Ebene mit den Befestigungslöchern liegen, und wobei Belüftungskanäle und/oder Sacklöcher im Reibring als Befestigungslöcher dienen,

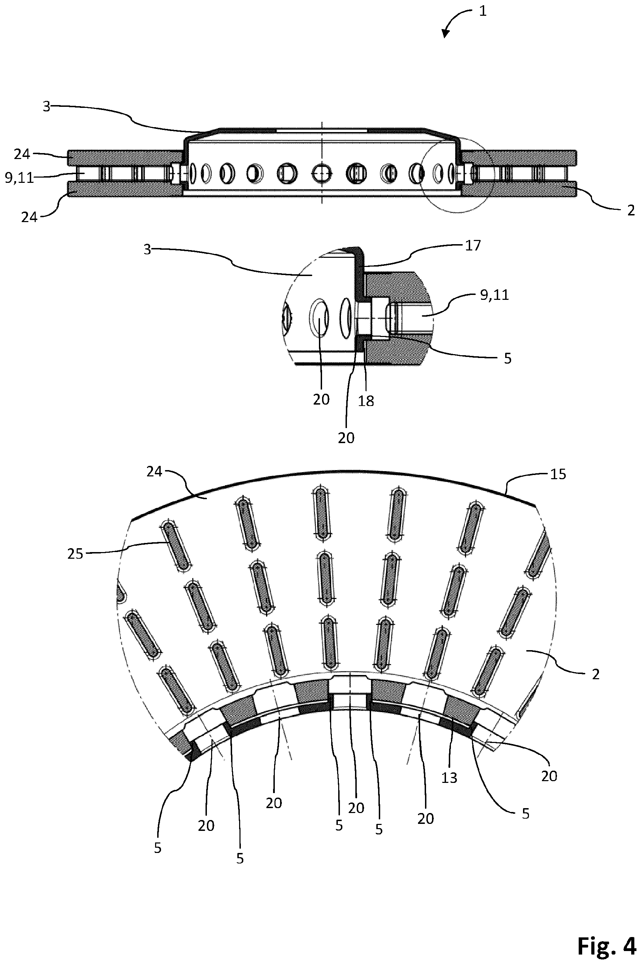

- Fig. 4: ein Beispiel einer nicht erfindungsgemäßen Bremsscheibe in mehreren Schnittdarstellungen, wobei ein Seitenwandabschnitt des Bremstopfes wenigstens teilweise gegenüber dem Innendurchmesser des Reibrings mit Untermaß gefertigt ist, so dass zwischen der Seitenwand des Bremstopfes und einer Innenumfangsfläche des Reibrings ein Spalt ausgebildet ist, wobei sämtliche Durchgangsöffnungen und Befestigungslöcher in einer gleichen Ebene liegen, und wobei Belüftungskanäle und/oder Sacklöcher im Reibring als Befestigungslöcher dienen,

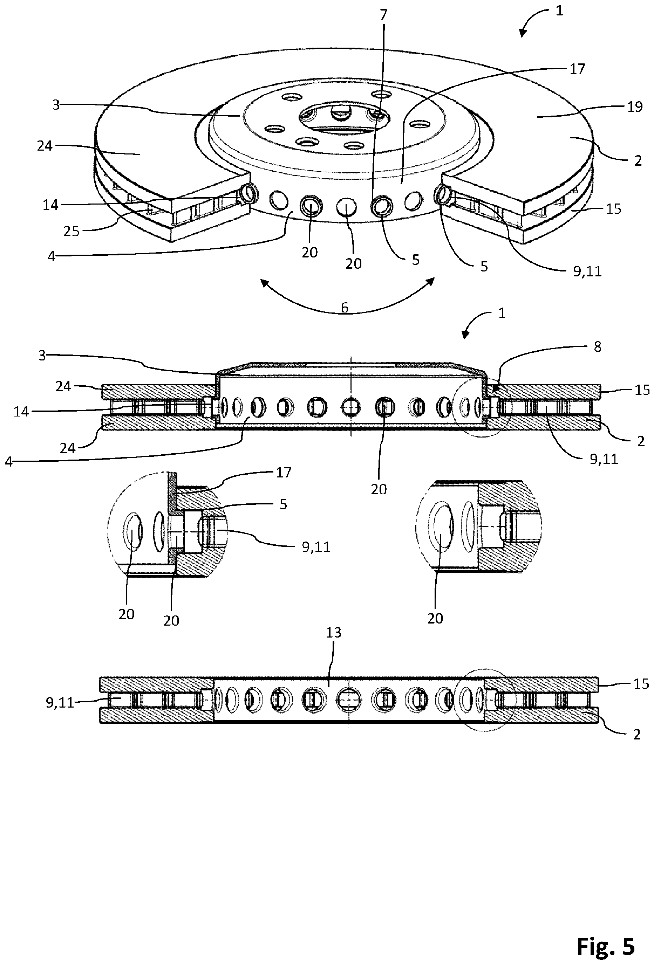

- Fig. 5: eine vierte Ausführungsvariante einer erfindungsgemäßen Bremsscheibe in einer perspektivischen Darstellung und in mehreren Schnittdarstellungen, wobei sämtliche Durchgangsöffnungen und Befestigungslöcher in einer gleichen Ebene liegen, und wobei Belüftungskanäle im Reibring als Befestigungslöcher dienen,

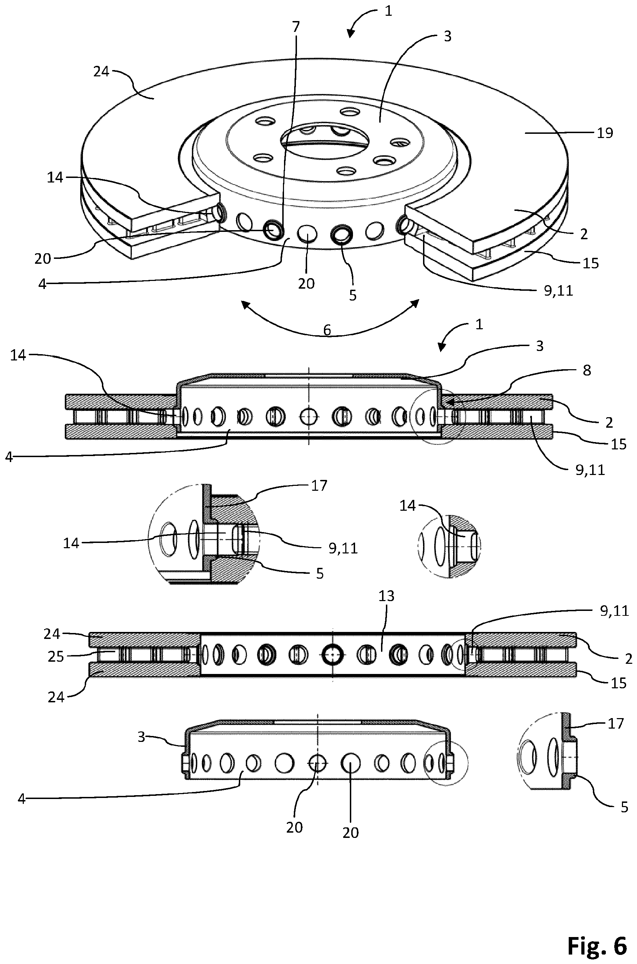

- Fig. 6: eine fünfte Ausführungsvariante einer erfindungsgemäßen Bremsscheibe in einer perspektivischen Darstellung und in mehreren Schnittdarstellungen, wobei sämtliche Durchgangsöffnungen und Befestigungslöcher in einer gleichen Ebene liegen, und wobei Belüftungskanäle im Reibring als Befestigungslöcher dienen,

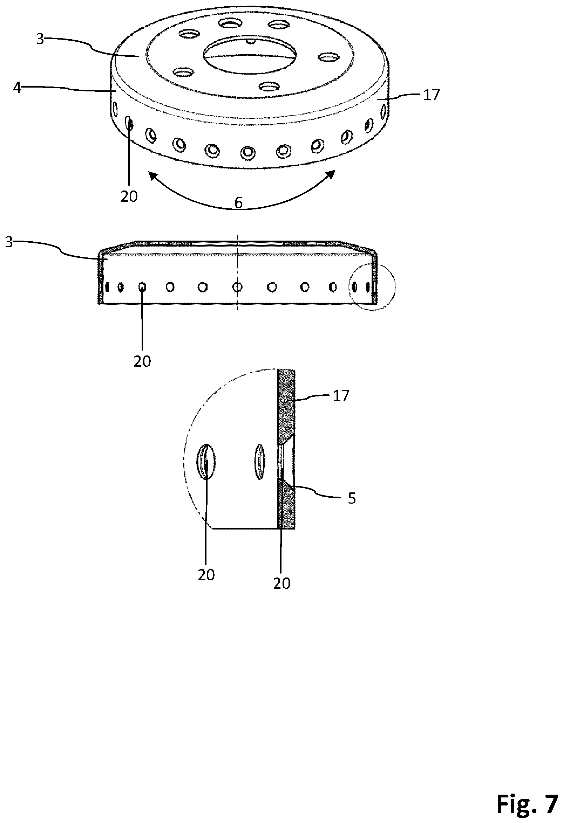

- Fig. 7: eine Ausgestaltungsvariante eines Bremstopfes, insbesondere vor Ausgestaltung der Umformungen, wobei die Umformungen beispielsweise durch Einbringen eines Stempels in die Durchgangslöcher ausbildbar sind,

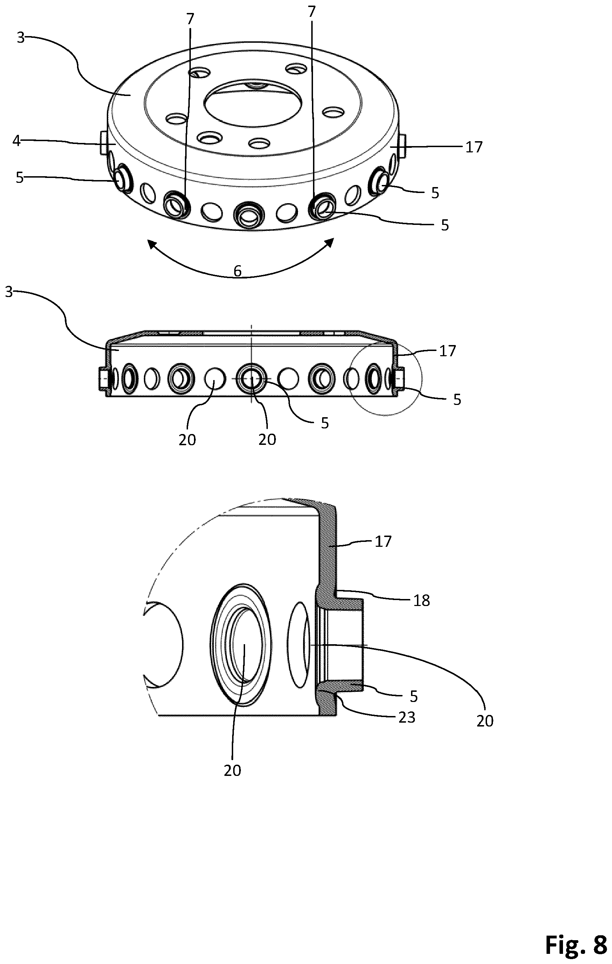

- Fig. 8: eine Ausgestaltungsvariante eines weiteren Bremstopfes nach Ausgestaltung der Umformungen, wobei an einer Biegestelle der Seitenwandung eine nach innen gerichtete Wölbung auftritt, durch welche am Außenumfang des Bremstopfes eine Rille ausgebildet ist, durch welche im Montagezustand zwischen dem Reibring und dem Bremstopf an dieser Stelle ein Spalt ausgebildet ist,

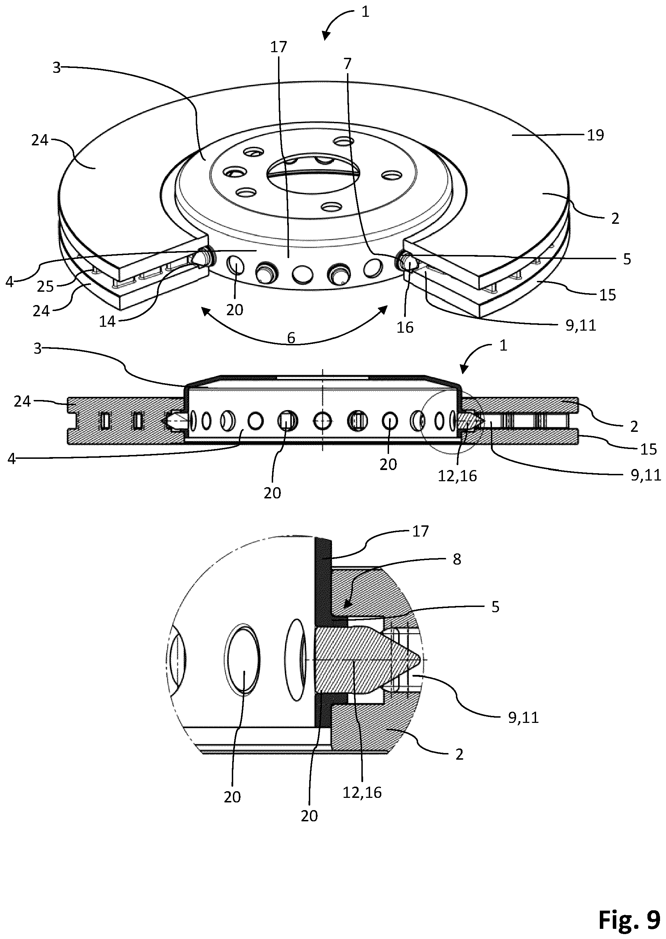

- Fig. 9: eine sechste Ausführungsvariante einer erfindungsgemäßen Bremsscheibe in einer perspektivischen Darstellung und in mehreren Schnittdarstellungen, wobei sämtliche Durchgangsöffnungen und Befestigungslöcher in einer gleichen Ebene liegen, wobei die Belüftungskanäle im Reibring als Befestigungslöcher dienen, und wobei die Anlagefläche/n durch die Umformungen und/oder mehrere Befestigungselemente ausgebildet ist/sind,

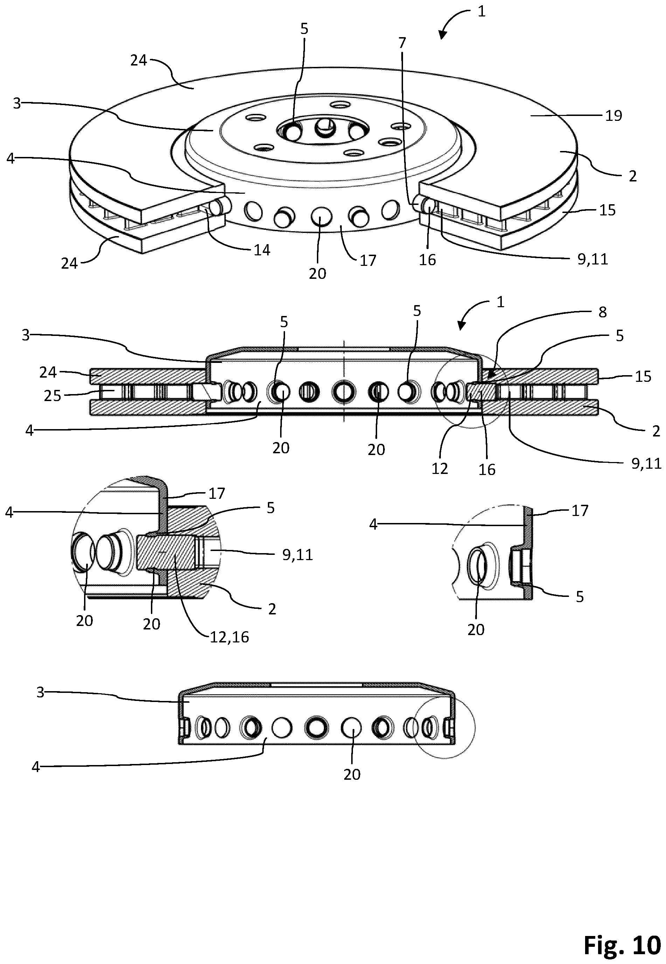

- Fig. 10: eine siebte Ausführungsvariante einer erfindungsgemäßen Bremsscheibe in einer perspektivischen Darstellung und in mehreren Schnittdarstellungen, wobei sämtliche Durchgangsöffnungen und Befestigungslöcher in einer gleichen Ebene liegen, wobei die Belüftungskanäle im Reibring als Befestigungslöcher dienen, und wobei die Anlageflächen durch mehrere Befestigungselemente ausgebildet sind, die jeweils durch die Umformungen gehalten werden,

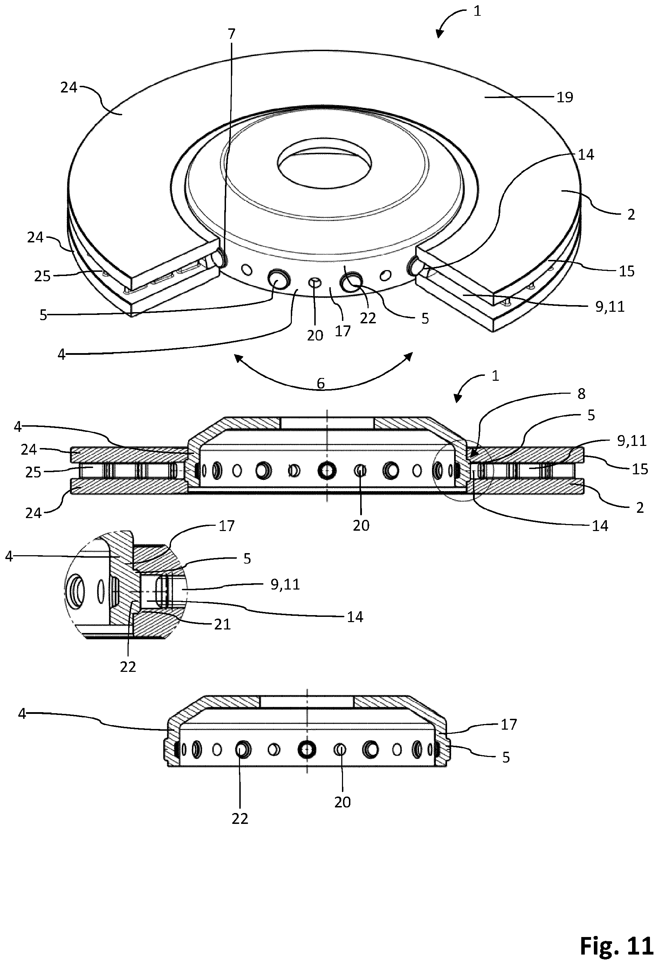

- Fig. 11: eine achte Ausführungsvariante einer erfindungsgemäßen Bremsscheibe in einer perspektivischen Darstellung und in mehreren Schnittdarstellungen, wobei sämtliche Umformungen und Befestigungslöcher in einer gleichen Ebene liegen, wobei die Belüftungskanäle im Reibring als Befestigungslöcher dienen, und wobei die Anlageflächen durch mehrere, jeweils als Prägungen ausgebildete Umformungen ausgebildet sind, die keine Durchgangsöffnungen aufweisen,

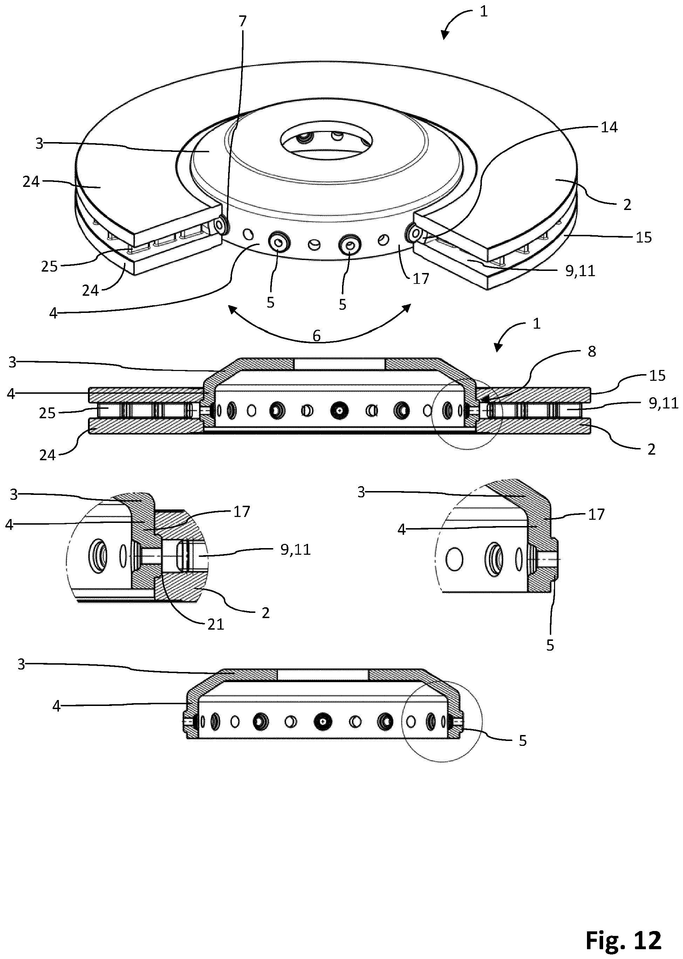

- Fig. 12: eine neunte Ausführungsvariante einer erfindungsgemäßen Bremsscheibe in einer perspektivischen Darstellung und in mehreren Schnittdarstellungen, wobei sämtliche Umformungen und Befestigungslöcher in einer gleichen Ebene liegen, wobei die Belüftungskanäle im Reibring als Befestigungslöcher dienen, und wobei die Anlageflächen durch mehrere, jeweils als Prägungen ausgebildete Umformungen ausgebildet sind, die jeweils eine Durchgangsöffnung aufweisen.

In den Figuren 1 bis 6 und 9 bis 12 sind unterschiedliche Ausführungsvarianten einer erfindungsgemäßen Bremsscheibe gezeigt, die im Ganzen jeweils mit 1 bezeichnet sind.

Die gezeigten Ausführungsformen der Bremsscheiben 1 eignen sich besonders zur Verwendung in Kraftfahrzeugen.

Jede der gezeigten Ausgestaltungen einer Bremsscheibe 1 weist einen Reibring 2 und einen mit dem Reibring 2 drehfest verbundenen Bremstopf 3 auf. Die drehfeste Verbindung kann beispielsweise durch einen Formschluss zwischen dem Reibring 2 und dem Bremstopf 3 ausgebildet sein.

Eine Seitenwandung 4 des Bremstopfes 3 weist wenigstens eine Umformung 5 auf, die in radialer Richtung von der Seitenwandung 4 absteht. Die dargestellten Ausführungsvarianten der Bremsscheibe 1 weisen jeweils mehrere Umformungen 5 auf.

Über die Umformungen 5 sind direkt oder indirekt mehrere Anlageflächen 7 ausgebildet, durch welche eine drehfeste Verbindung 8 zwischen dem Reibring 2 und dem Bremstopf 3 in Montagestellung eingerichtet ist.

Ein aus Außendurchmesser (Da) eines Seitenwandabschnitts 17 des Bremstopfes 3 und einem Innendurchmesser Di des Reibring 2 gebildetes Verhältnis (Da/Di) beträgt max. 1,01. Durch das Übermaß des Bremstopfes 3 ist eine noch bessere Fixierung des Bremstopfes 3 im Reibring 2 möglich. Ein größeres Übermaß wäre hingegen nachteilig, da dies dazu führen kann, dass eine Deformation des Bremstopfes 3 auftreten kann.

Der Reibring 2 weist wenigstens ein Befestigungsloch 9 auf. Als Befestigungsloch 9 im Sinne der Anmeldung können sämtliche Lochstrukturen verstanden werden, die grundsätzlich zur Ausbildung einer drehfesten Verbindung zwischen dem Reibring 2 und dem Bremstopf 3 geeignet sind. Insbesondere kann sich der Begriff Befestigungsloch 9 auf ein Sackloch 10 und/oder einen Lüftungskanal 11 des Reibring 2 beziehen. Die gezeigten Ausführungsformen weisen entsprechend jeweils mehrere Befestigungslöcher 9 auf.

Man kennt bereits innenbelüftete Reibringe 2, bei welchen wenigstens ein in radialer Richtung verlaufender Belüftungskanal 11 ausgebildet ist, der sich beispielsweise von einer in einer in der Umfangsfläche 13 ausgebildeten Eintrittsöffnung 14 bis zu einer Außenumfangsfläche 15 des Reibrings 2 erstreckt. Bei den in den Figuren gezeigten Reibringen 2 handelt es sich ebenfalls um innenbelüftete Reibringe 2, die jeweils mehrere Belüftungskanäle 11, die durchgehend und/oder nicht durchgehend ausgebildet sein können, aufweisen.

Wie in den Figuren 1, 2, 3, 4, 5, 6, 8, 9, 11 und 12 dargestellt ist, können sich die Umformungen 5 radial nach außen richten und jeweils in ein Befestigungsloch 9 hineinragen. Dabei können die Umformungen 5 wenigstens teilweise an einer Innenwandung des Befestigungslochs 9 anliegen, so dass eine formschlüssige Verbindung zwischen Reibring 2 und Bremstopf 3 eingerichtet ist. Als Anlageflächen 7 gelten in diesem Fall die Flächen der Umformungen 5, die zumindest in Umfangsrichtung 6 des Bremstopfes 3 orientiert sind.

Es ist jedoch auch denkbar, die Umformungen 5 radial nach innen zu richten, wie in Figur 10 gezeigt ist. Bei dieser Ausgestaltung in Figur 10 ist die Anlagefläche 7 ausschließlich durch ein Befestigungselement 12 ausgebildet, dass durch eine Durchgangsöffnung 20 und/oder eine Umformung 5 gehalten ist. Das Befestigungselement 12 greift hierbei in ein dem Befestigungselement 12 zugeordnetes Befestigungsloch 9 im Reibring 2 ein. Dadurch ist eine drehfeste, insbesondere formschlüssige Verbindung eingerichtet. Als Anlageflächen 7 gelten in diesem Fall die Flächen der Befestigungselemente 12, die zumindest in Umfangsrichtung 6 des Bremstopfes 3 orientiert sind.

Das Befestigungselement 12 kann beispielsweise als ein Bolzen und/oder als ein zur Ausbildung einer Umformung 5 eingesetzter, zurückbleibender Stempel 16 ausgestaltet sein.

Eine weitere Ausgestaltung mit mehreren Befestigungselementen 12 ist in Figur 9 gezeigt. Die Befestigungselemente 12 werden hierbei durch die Seitenwandung 4 des Bremstopfes 3 getrieben, so dass die Umformungen 5 jeweils durch die Einbringung des Befestigungselement 12 ausgebildet werden. Gleichzeitig ragen die Befestigungselemente 12 in jeweils ein Befestigungsloch 9 im Reibring 2 hinein. Dadurch ist eine drehfeste, formschlüssige Verbindung zwischen dem Reibring 2 und dem Bremstopf 3 ausgestaltet.

Die Befestigungselemente 12 können somit jeweils eine Durchgangsöffnung 20 des Bremstopfes verschließen und/oder durch die Umformungen 5 gehalten werden.

Bei den dargestellten Ausführungsvarianten in den Figuren 9 und 10 weist der Bremstopf 3 mehrere Durchgangsöffnungen 20 auf, wobei jede zweite Durchgangsöffnung 20 ein Befestigungselement 12 aufweist.

Die Anlageflächen 7 bei der in Figur 9 gezeigten Ausführungsvariante werden sowohl durch die Umformungen 5 als auch die Befestigungselement 12 ausgebildet.

Bei der in Figur 4 gezeigten nicht erfindungsgemäßen Bremsscheibe ist der Bremstopf 3 im Vergleich zum Reibring 2 mit einem gewissen Untermaß gefertigt. Das bedeutet, dass ein aus Außendurchmesser Da des Seitenwandabschnitts 17 des Bremstopfes 3 und einem Innendurchmesser Di des Reibrings 2 gebildetes Verhältnis Da/Di hier kleiner als 1 ist, insbesondere minimal 0,99 beträgt.

Zwischen dem Seitenwandabschnitt 17 des Bremstopfes 3 und einer oder der Innenumfangsfläche 13 des Reibrings 2 ist somit ein Spalt 18 ausgebildet. Durch diesen Spalt 18 kann ein negativer Effekt der Schirmung, der während eines Bremsvorgangs auftreten kann, besser vermieden werden, da eine Art Pufferzone ausgebildet ist.

Die Durchgangsöffnungen 20 können beispielsweise durch Ausstanzen und/oder durch Laserbearbeitung des Seitenwandabschnitt 17 ausgebildet werden. Laserbearbeitung kann dabei zum Beispiel ein Anlassen und/oder auch ein komplettes Ausschneiden der Durchgangsöffnungen 20 im Seitenwandabschnitt 17 sein.

Bei dem in Figur 7 dargestellten Bremstopf 3 ist ein Bremstopf 3 mit mehreren, in einer Ebene liegenden Durchgangsöffnungen 20 dargestellt. Ein Öffnungsquerschnitt der Durchgangsöffnungen 20 erweitert sich nach außen. Durch Abprägen der Durchgangsöffnungen 20 im Bremstopf 3 kann eine Druckspannung am Innendurchmesser erhalten werden, welche später die Rissbildung reduziert (Zugspannung nach Ausbildung der Umformung 5, insbesondere nach Ausbildung einer Einhalsung, die in ein Befestigungsloch 9 hineinragt).

Bei der in Figur 8 gezeigten Ausgestaltung ist, insbesondere aufgrund der verwendeten Wandstärke, an einer Biegestelle der Seitenwandung 4 eine nach innen gerichtete Wölbung 23 ausgebildet, durch welche am Außenumfang des Bremstopfes 3 eine Rille ausgebildet ist, durch welche im Montagezustand zwischen dem Reibring 2 und dem Bremstopf 3 an dieser Stelle ein Spalt 18 ausgebildet ist. Lastspitzen, die insbesondere auf die Biegestelle wirken, können somit besser vermieden werden. Insbesondere bei einem Bremstopf 3 aus Leichtmetall, wie Aluminium, muss zur Ausbildung eines ausreichend stabilen Bremstopfes 3 eine deutlich dickere Wandstärke im Vergleich zu Bremstöpfen 3 aus Stahl verwendet werden. In diesem Fall ist jedoch eine Ausbildung einer rechtwinkligen Kante aufgrund der Wandstärke während des Umformvorgangs nicht mehr möglich. Daher ist es somit sinnvoll, Prägeverfahren einzusetzen, um eine als Prägung 22 ausgestaltete Umformung 5 auszubilden (vgl. Fig. 11 und 12).

Die Wölbung 23 kann beispielsweise als konzentrische Welle ausgebildet sein, wobei die Wölbung 23 Material vorhält und anschließend das Ausbilden einer Umformung 5, insbesondere das Ausbilden einer (Ein)Halsung, ermöglicht. Durch das vorgehaltene Material können beispielsweise auch in radialer Richtung längere Umformungen ausgebildet werden. Zur Montage der Bremsscheibe 1 kann eine vorgefertigte Umformung 5, insbesondere eine Halsung, radial nach außen gedrückt werden, wodurch der Montageprozess wesentlich vereinfacht ist (z.B. wobei in nur einem Schritt alle Halsungen nach außen in die entsprechenden Befestigungslöcher 9 gedrückt werden.

Ein Innendurchmesser des Reibrings 2 ist durch eine innere Begrenzung einer Reibfläche 19 definiert, wobei auf der Reibfläche 19 der Bremsvorgang erfolgt. Somit ist eine möglichst großflächige und gewichtssparende Ausgestaltung einer Bremsscheibe 1 möglich.

Wie in den Figuren 11 und 12 gezeigt ist, können die Umformungen 5 jeweils zumindest teilweise durch Prägungen 22 ausgestaltet sein. Derartige Umformungen 5 können mit oder ohne eine Durchgangsöffnung 20 ausgestaltet sein. Insbesondere eignet sich diese Ausgestaltung für Bremstöpfe 3 aus Aluminium. Prägeverfahren weisen den Vorteil auf, dass damit auch größere Blechdicken verarbeitet werden können, ohne dass es zu Rissbildungen oder zu großen Materialansammlungen insbesondere an Biegestellen im Seitenwandabschnitt 17 kommt.

Grundsätzlich weisen Ausgestaltungen eines Bremstopfes 3 mit Durchgangsöffnungen 20 die Möglichkeit auf, eine bessere Innenbelüftung der Bremsscheibe 1 durch bessere Wärmeableitung zu erreichen.

Die Durchgangsöffnungen 20 können beispielsweise den Eintrittsöffnung 14 der Belüftungskanäle 11 des Reibring 2 zugeordnet sein. Besonders einfach ist dies, wenn sämtliche Durchgangsöffnung 20 und Eintrittsöffnung 14 in einer gleichen Ebene angeordnet sind.

Die Ebene kann sich dabei auf eine durch den Reibring 2 definierte Ebene beziehen. Vorzugsweise kann es sich bei dem Reibring 2 um einen Reibring 2 mit einer Ober- und einer Unterseite handeln, welcher vorzugsweise aus zwei, über Stege 25 miteinander verbundene Reibscheiben 24 ausgebildet ist.

Die einzelnen Belüftungskanäle 11 und/oder die Befestigungslöcher 9 können durch mehrere Stege 25 begrenzt sein.

Die Stege 25 können sich somit in axialer Richtung zwischen zwei Reibscheiben 24 erstrecken.

Es kann vorgesehen sein, dass die Bremsscheibe 1 mehrere hintereinander, insbesondere in einer Reihe oder Linie, angeordnete und/oder durch einen Freiraum voneinander getrennte Stege 25 aufweist.

Die Durchgangsöffnungen 20 und/oder Umformungen 5 können jedoch auch in unterschiedlichen Ebenen angeordnet sein, wie beispielsweise in Figur 3 gezeigt ist. Hierbei können die Durchgangsöffnungen 20 teilweise unterschiedliche Zwecke erfüllen. Die den Belüftungskanälen 11 zugeordneten Durchgangsöffnung 20 können zur besseren Innenbelüftung dienen. Die in einer davon abweichenden Ebene angeordneten Durchgangsöffnungen 20 und/oder Umformungen 5 können insbesondere ausschließlich zur Ausbildung der drehfesten Verbindung zwischen Reibring 2 und Bremstopf 3 vorgesehen sein oder eine Doppelaufgabe übernehmen.

Ein Randbereich der Durchgangsöffnungen 20 kann beispielsweise jeweils als die zuvor genannten Umformungen 5 ausgebildet sein. Die Umformungen 5 können hierbei zum Beispiel als Halsungen ausgestaltet sein, welche vorzugsweise jeweils als umlaufender Kragen um die Durchgangsöffnung 20 ausgebildet sind.

Die Umformungen 5 der Bremsscheiben 1 können gleichmäßig verteilt, insbesondere punktsymmetrisch verteilt, in einer Ebene oder in mehreren Ebenen angeordnet sein.

Die Umformungen 5 können auch ungleichmäßig, insbesondere in unterschiedlichen Winkelabständen zueinander in einer Ebene oder mehreren Ebenen angeordnet sein.

Der Bremstopf 3 kann umformungsfreie Durchgangsöffnungen 20 aufweisen. Wie bereits zuvor erläutert, können die Durchgangsöffnungen mit und ohne Umformungen 5 unterschiedliche Funktionen erfüllen. Durchgangsöffnung 20 ohne Umformungen 5 können beispielsweise zur Belüftung vorgesehen sein. Durchgangsöffnungen 20 mit Umformungen 5 können beispielsweise zur Belüftung und/oder zur Ausbildung der drehfesten Verbindung 8 vorgesehen sein.

Eine Geometrie der Befestigungslöcher 9 kann jeweils durch ein Gießverfahren in einem Guss vorgehalten sein, wobei weitere Nachbearbeitungsschritte, wie eine zerspanende Bearbeitung, nicht erforderlich sind.

Die Umformungen 5 können eine gleichmäßige Form aufweisen, so dass im Lastfall ein gleichmäßiger Spannungsverlauf erreichbar ist.

Wenigstens ein Befestigungsloch 9 kann einen Anschlag 21 aufweisen, welcher beispielsweise als eine Stufe ausgebildet sein kann. Die wenigstens eine Umformung 5, die in das Befestigungsloch 9 eingreift, kann den Anschlag 21 beaufschlagen.

Eine Anzahl an Umformungen 5 kann geringer sein als eine Anzahl von möglichen Befestigungslöchern 9.

Eine Anzahl an Befestigungselementen 12 kann ebenfalls geringer sein als eine Anzahl von möglichen Befestigungslöchern 9.

Durch eine Veränderung der Anzahl der Umformungen 5 und/oder der Befestigungselemente 12 ist es möglich, ein Bremsmoment der Bremsscheibe 1 einstellen zu können.

Wie in den Figuren 1 bis 12 gezeigt ist, können die Umformungen 5 in regelmäßigen Winkelabständen zueinander angeordnet sein. Dadurch ist eine besonders gleichmäßige Lastenverteilung während eines Bremsvorganges möglich.

Die Erfindung betrifft also insbesondere eine vorzugsweise innenbelüftete Bremsscheibe 1, die wenigstens einen Reibring 2 und einen mit dem Reibring 2 drehfest verbundenen Bremstopf 3 umfasst, wobei ein Seitenwandabschnitt 17 des Bremstopfes 3 mehrere, radial ausgerichtete Umformungen 5 aufweist, über welche Umformungen 5 eine sich in radialer Richtung erstreckende Anlagefläche 7 ausgebildet ist, mit welcher Anlagefläche 7 eine drehfeste Verbindung 8 zwischen dem Reibring 2 und dem Bremstopf 3 eingerichtet ist, und wobei ein aus Außendurchmesser Da eines Seitenwandabschnitts 17 des Bremstopfes 3 und einem Innendurchmesser Di des Reibrings 2 gebildetes Verhältnis Da/Di maximal 1,01 beträgt.

### Bezugszeichenliste

- 1: Bremsscheibe
- 2: Reibring
- 3: Bremstopf
- 4: Seitenwandung
- 5: Umformung
- 6: Umfangsrichtung
- 7: Anlagefläche
- 8: drehfeste Verbindung
- 9: Befestigungsloch
- 10: Sackloch
- 11: Belüftungskanal
- 12: Befestigungselement
- 13: Innenumfangsfläche
- 14: Eintrittsöffnung
- 15: Außenumfangsfläche
- 16: Stempel
- 17: Seitenwandabschnitt
- 18: Spalt
- 19: Reibfläche
- 20: Durchgangsöffnung
- 21: Anschlag
- 22: Prägung
- 23: Wölbung
- 24: Reibscheibe
- 25: Steg

## Patentansprüche

1. Bremsscheibe (1), die wenigstens einen Reibring (2) und einen mit dem Reibring (2) drehfest verbundenen Bremstopf (3) umfasst, wobei eine Seitenwandung (4) des Bremstopfes (3) wenigstens eine Umformung (5) in radialer Richtung aufweist, über welche Umformung (5) eine in Umfangsrichtung (6) des Bremstopfes (3) orientiere Anlagefläche (7) ausgebildet ist, mit welcher Anlagefläche (7) eine drehfeste Verbindung (8) zwischen dem Reibring (2) und dem Bremstopf (3) eingerichtet ist, wobei ein Außendurchmesser Da des Bremstopfes (3) größer als ein Innendurchmesser Di des Reibrings (2) ausgebildet ist,
**dadurch gekennzeichnet, dass** ein aus dem Außendurchmesser Da des Bremstopfes (3) und dem Innendurchmesser Di des Reibrings (2) gebildetes Verhältnis Da/Di maximal 1,01 beträgt.

2. Bremsscheibe (1) nach Anspruch 1, wobei der Reibring (2) wenigstens ein Befestigungsloch (9), insbesondere wenigstens ein als Sackloch (10) und/oder als ein Belüftungskanal (11) ausgestaltetes Befestigungsloch (9), aufweist.

3. Bremsscheibe nach Anspruch 2, wobei in das wenigstens eine Befestigungsloch (9) die wenigstens eine Umformung (5) und/oder ein in die wenigstens eine Umformung (5) eingesetztes und/oder von der wenigstens einen Umformung (5) gehaltenes Befestigungselement (12) wenigstens teilweise eingreift.

4. Bremsscheibe (1) nach einem der vorstehenden Ansprüche, wobei der Reibring (2) wenigstens einen wenigstens teilweise in radialer Richtung verlaufenden Belüftungskanal (11) aufweist.

5. Bremsscheibe nach Anspruch 4, wobei sich der Belüftungskanal (11) von einer in einer Innenumfangsfläche (13) ausgebildeten Eintrittsöffnung (14) bis zu einer Außenumfangsfläche (15) des Reibrings (2) erstreckt.

6. Bremsscheibe (1) nach einem der vorstehenden Ansprüche, wobei die Umformung (5) nach außen gerichtet ist.

7. Bremsscheibe nach einem der vorstehenden Ansprüche, wobei die Umformung (5) nach innen gerichtet ist.

8. Bremsscheibe (1) nach einem der vorstehenden Ansprüche, wobei in die wenigstens eine Umformung (5) wenigstens ein Befestigungselement (12) eingesetzt ist.

9. Bremsscheibe (1) nach einem der vorstehenden Ansprüche, wobei von der Umformung (5) wenigstens ein Befestigungselement (12) gehalten ist, wobei die Anlagefläche (7) wenigstens teilweise durch das Befestigungselement (12) ausgebildet ist.

10. Bremsscheibe (1) nach einem der vorstehenden Ansprüche, wobei der Innendurchmesser des Reibrings (2) durch eine innere Begrenzung einer Reibfläche (19), auf welcher ein Bremsvorgang erfolgt, bestimmt ist.

11. Bremsscheibe (1) nach einem der vorstehenden Ansprüche, wobei die wenigstens eine Umformung (5) durch Stanzen und/oder Verbiegen und/oder eine Prägung (22) der Wandung des Bremstopfes (3) ausgebildet ist, insbesondere wenn der Bremstopf (3) im Reibring (2) angeordnet ist.

12. 13. Bremsscheibe (1) nach einem der vorstehenden Ansprüche, wobei der Bremstopf (3) wenigstens eine Durchgangsöffnung (20) aufweist, vorzugsweise wobei die wenigstens eine Durchgangsöffnung (20) einer oder der wenigstens einen Eintrittsöffnung (14) eines Belüftungskanals (11) des Reibrings (2) zugeordnet ist.

13. Bremsscheibe (1) nach einem der vorstehenden Ansprüche, wobei ein Randbereich einer oder der wenigstens einen Durchgangsöffnung (20) als die wenigstens eine Umformung (5) ausgebildet ist.

14. Bremsscheibe (1) nach einem der vorstehenden Ansprüche, wobei die wenigstens eine Umformung (5) und/oder die wenigstens eine Durchgangsöffnung (20) des Bremstopfes (3) korrespondierend und/oder abweichend von einer Position einer oder der wenigstens einen Eintrittsöffnung (14) eines oder des Belüftungskanals (11) am Reibring (2) angeordnet ist.

15. Bremsscheibe (1) nach einem der vorstehenden Ansprüche, wobei der Bremstopf (3) wenigstens eine Durchgangsöffnung (20) mit einer Umformung (5) und wenigstens eine Durchgangsöffnung (20) ohne eine Umformung (5) aufweist.

16. Bremsscheibe (1) nach einem der vorstehenden Ansprüche, wobei wenigstens ein oder das wenigstens eine Befestigungselement (12) als ein Hohlstift ausgestaltet ist.

17. Bremsscheibe (1) nach einem der vorstehenden Ansprüche, wobei eine Anzahl an Umformungen (5) und/oder eine Anzahl an Befestigungselementen (12) jeweils geringer als eine Anzahl von Befestigungslöchern (9) ist.

## Claims

1. Brake disc (1), which comprises at least one friction ring (2) and a brake pot (3) which is corotationally connected to the friction ring (2), wherein a side wall (4) of the brake pot (3) has at least one deformation (5) in a radial direction, via which deformation (5) there is formed a contact surface (7) oriented in the circumferential direction (6) of the brake pot (3), with which contact surface (7) a corotational connection (8) between the friction ring (2) and the brake pot (3) is set up, wherein an external diameter Da of the brake pot (3) is greater than an internal diameter Di of the friction ring (2),
**characterized in that** a ratio Da/Di formed from the external diameter Da of the brake pot (3) and the internal diameter Di of the friction ring (2) is at most 1.01.

2. Brake disc (1) according to Claim 1, wherein the friction ring (2) has at least one securing hole (9), in particular at least one securing hole (9) which is configured as a blind hole (10) and/or as a ventilation channel (11).

3. Brake disc according to Claim 2, wherein the at least one deformation (5) and/or a securing element (12) inserted into the at least one deformation (5) and/or retained by the at least one deformation (5) engages at least partly in the at least one securing hole (9).

4. Brake disc (1) according to one of the preceding claims, wherein the friction ring (2) has at least one ventilation channel (11) extending at least partly in the radial direction.

5. Brake disc according to Claim 4, wherein the ventilation channel (11) extends from an inlet opening (14) formed in an internal circumferential surface (13) as far as an outer circumferential surface (15) of the friction ring (2).

6. Brake disc (1) according to one of the preceding claims, wherein the deformation (5) is directed outwards.

7. Brake disc according to one of the preceding claims, wherein the deformation (5) is directed inwards.

8. Brake disc (1) according to one of the preceding claims, wherein at least one securing element (12) is inserted into the at least one deformation (5).

9. Brake disc (1) according to one of the preceding claims, wherein at least one securing element (12) is retained by the deformation (5), wherein the contact surface (7) is at least partly formed by the securing element (12).

10. Brake disc (1) according to one of the preceding claims, wherein the internal diameter of the friction ring (2) is determined by an inner limit of a frictional surface (19) on which a braking operation is carried out.

11. Brake disc (1) according to one of the preceding claims, wherein the at least one deformation (5) is formed by punching and/or bending and/or embossing (22) the wall of the brake pot (3), in particular if the brake pot (3) is arranged in the friction ring (2).

12. Brake disc (1) according to one of the preceding claims, wherein the brake pot (3) has at least one through opening (20), preferably wherein the at least one through opening (20) is associated with one or the at least one inlet opening (14) of a ventilation channel (11) of the friction ring (2).

13. Brake disc (1) according to one of the preceding claims, wherein an edge region of one or of the at least one through opening (20) is formed as the at least one deformation (5).

14. Brake disc (1) according to one of the preceding claims, wherein the at least one deformation (5) and/or the at least one through opening (20) of the brake pot (3) is arranged so as to correspond and/or differ from a position of one or of the at least one inlet opening (14) of one or of the ventilation channel (11) on the friction ring (2).

15. Brake disc (1) according to one of the preceding claims, wherein the brake pot (3) has at least one through opening (20) having a deformation (5) and at least one passage opening (20) without a deformation (5).

16. Brake disc (1) according to one of the preceding claims, wherein at least one or the at least one securing element (12) is configured as a hollow pin.

17. Brake disc (1) according to one of the preceding claims, wherein a number of deformations (5) and/or a number of securing elements (12) is in each case lower than a number of securing holes (9).

## Revendications

1. Disque de frein (1) qui comprend au moins une bague de friction (2) et un bol de frein (3) relié solidairement en rotation à la bague de friction (2), dans lequel une paroi latérale (4) du bol de frein (3) présente au moins un façonnage (5) dans la direction axiale, une surface de contact (7) orientée dans la direction périphérique (6) du bol de frein (3) étant formée par ce façonnage (5), une liaison solidaire en rotation (8) étant établie entre la bague de friction (2) et le bol de frein (3) par cette surface de contact (7), un diamètre extérieur Da du bol de frein (3) supérieur étant supérieur à un diamètre intérieur Di de la bague de friction,
**caractérisé en ce qu'**un rapport Da/Di entre le diamètre extérieur Da du bol de frein (3) et le diamètre intérieur Di de la bague de friction (2) est de 1,01 maximum.

2. Disque de frein (1) selon la revendication 1, dans lequel la bague de friction (2) comporte au moins un trou de fixation (9) configuré comme un trou borgne (10) et/ou comme un canal d'aération (11).

3. Disque de frein (1) selon la revendication 2, dans lequel l'au moins un façonnage (5) et/ou un élément de fixation (12) inséré dans l'au moins un façonnage (5) et/ou maintenu par l'au moins un façonnage (5) pénètrent au moins partiellement dans l'au moins un trou de fixation (9).

4. Disque de frein (1) selon une des revendications précédentes, dans lequel la bague de friction (2) comporte au moins un canal d'aération (11) courant au moins partiellement Zn direction radiale.

5. Disque de frein (1) selon la revendication 4, dans lequel le canal d'aération (11) s'étend d'un orifice d'entrée (14) formé dans une surface périphérique intérieure (13) à une surface périphérique extérieure (15) de la bague de friction (2).

6. Disque de frein (1) selon une des revendications précédentes, dans lequel le façonnage (5) est dirigé vers l'extérieur.

7. Disque de frein (1) selon une des revendications précédentes, dans lequel le façonnage (5) est dirigé vers l'intérieur.

8. Disque de frein (1) selon une des revendications précédentes, dans lequel au moins un élément de fixation (12) est inséré l'au moins un façonnage (5).

9. Disque de frein (1) selon une des revendications précédentes, dans lequel au moins un élément de fixation (12) est maintenu par le façonnage (5), la surface de contact (7) étant constituée au moins partiellement par l'élément de fixation (12).

10. Disque de frein (1) selon une des revendications précédentes, dans lequel le diamètre intérieur de la bague de friction (2) est déterminé par une limitation intérieure d'une surface de friction (19) sur laquelle un processus de freinage a lieu.

11. Disque de frein (1) selon une des revendications précédentes, dans lequel l'au moins un façonnage (5) est formé par emboutissage et/ou pliage et/ou un estampage (22) de la paroi du bol de frein (3), en particulier quand le bol de frein (3) est agencé dans la bague de friction (3).

12. Disque de frein (1) selon une des revendications précédentes, dans lequel le bol de frein (3) présente au moins un orifice traversant (20), l'au moins un orifice traversant (20) étant de préférence associé à un ou à l'au moins un orifice d'aération (11) de la bague de friction (2).

13. Disque de frein (1) selon une des revendications précédentes, dans lequel une zone de bordure d'un ou de l'au moins un orifice traversant (20) est configurée comme l'au moins un façonnage (5).

14. Disque de frein (1) selon une des revendications précédentes, dans lequel l'au moins un façonnage (5) et/ou l'au moins un orifice traversant (20) du bol de frein (3) sont disposés de façon correspondante et/ou différente d'une position d'un ou de l'au moins un orifice d'entrée (14) d'un ou du canal d'aération (11) sur la bague de friction (2).

15. Disque de frein (1) selon une des revendications précédentes, dans lequel le bol de frein (3) présente au moins un orifice traversant (20) avec un façonnage (5) et au moins un orifice traversant (20) sans façonnage (5).

16. Disque de frein (1) selon une des revendications précédentes, dans lequel au moins un ou l'au moins un élément de fixation (12) est configuré comme une tige creuse.

17. Disque de frein (1) selon une des revendications précédentes, dans lequel un nombre de façonnages (5) et/ou un nombre d'éléments de fixation (12) sont respectivement inférieurs à un nombre de trous de fixation (9).
